# EUROPÄISCHE PATENTSCHRIFT

(11) **EP 2 666 152 B1**
(45) Veröffentlichungstag und Bekanntmachung des Hinweises auf die Patenterteilung: **29.04.2015**
(21) Anmeldenummer: 12715866.5
(22) Anmeldetag: 21.03.2012
(51) Int. Cl.: G08B 25/00, G08B 17/00, G08B 29/14

(54) **AUTOMATISCHE VERORTUNG VON FEUERMELDERN**
AUTOMATICALLY LOCATING FIRE ALARMS
LOCALISATION AUTOMATIQUE DE DÉTECTEURS D'INCENDIE

(30) Priorität: 25.03.2011 DE 102011006153
(43) Veröffentlichungstag der Anmeldung: 27.11.2013
(73) Patentinhaber: Siemens Schweiz AG, 8047 Zürich (CH)
(72) Erfinder: KOLB, Dieter, 82110 Germering (DE)
(74) Vertreter: Maier, Daniel Oliver
(86) Internationale Anmeldenummer: PCT/EP2012/054936
(87) Internationale Veröffentlichungsnummer: WO 2012/130670

(56) Entgegenhaltungen:
- WO-A1-2012/045996
- GB-A- 2 319 373
- US-A1- 2007 096 901
- US-A1- 2009 070 477

## Beschreibung

Die vorliegende Erfindung betrifft ein Verfahren zur automatischen Verortung eines Feuermelders, insbesondere in einem Gebäude, und eine Vorrichtung zur Durchführung des Verfahrens.

Größere Gebäude (Bürogebäude, öffentliche Gebäude) sind in der Regel mit Feuermeldern ausgestattet, die im Feuerfall automatisch einen Alarm auslösen. Dieser Alarm läuft in einer Leitwarte auf und zeigt dort an, in welchem Raum oder Teil des Gebäudes ein Brand ausgebrochen ist. Dazu muss in der Leitwarte bekannt sein, welcher Feuermelder wo verbaut ist.

Jeder Feuermelder besitzt üblicherweise eine eindeutige Identifikationsnummer, z.B. eine sogenannten MAC-Adresse (Media-Access-Control- Adresse), die er zusammen mit dem Alarmgrund in seiner Alarmnachricht an die Leitwarte sendet. Damit in der Leitwarte anhand der Identifikationsnummer der genaue Ort des Alarms ermittelt werden kann, muss der Techniker bei der Installation des Feuermelders den Installationsort erfassen und zusammen mit der Identifikationsnummer z.B. in einer Datenbank speichern. Dazu muss er vor der Montage die Identifikationsnummer auf dem Feuermelder ablesen und in einem Dokument erfassen. Zusätzlich muss er die Nummer oder den Name des Raums erfassen, bei größeren Räumen auch noch eine Beschreibung der Position im Raum. Häufig wird dies bei der Montage auf einem Papier erfasst und später am Computer in eine Datenbank übertragen. Die Daten können aber auch gleich bei der Montage auf einem Notebook eingegeben werden. In einer anderen bekannten Vorgehensweise wird vor der Montage in einem Gebäudeplan für jeden vorgesehenen Feuermelder eine eindeutige Identifikationsnummer vergeben und in dem Plan eingetragen. An den einzelnen Feuermeldern wird die vergebene Identifikationsnummer eingestellt und der Feuermelder entsprechend beschriftet. Bei der Montage muss dann der Techniker den für den jeweiligen Einbauort vorgesehenen Feuermelder entsprechend seiner Beschriftung auswählen und verbauen. Er muss dabei genau darauf achten, dass er den richtigen Feuermelder am richtigen Ort einbaut. Die bekannten Verfahren beruhen auf manuellen Eingaben und sind daher fehleranfällig.

Das Dokument GB 2 319 373 A (MENVIER [GB]) 20. Mai 1998 (1998-05-20) offenbart ein Verfahren zur Verortung eines Feuermelders, insbesondere in einem Gebäude, das Verfahren umfassend die folgenden Schritte:
- Kennzeichnen der Position in einem Plan, an der der Feuermelder angebracht ist, durch einen Bediener mit Eingabemittel, wobei der Plan auf einem mobilen Kommunikationsgerät des Bedieners dargestellt ist;
- Auslösen einer Testmeldung des Feuermelders an eine Leitwarte durch den Bediener, wobei die Testmeldung eine eindeutige Identifikationsnummer des Feuermelders umfasst, wobei die Testmeldung unvermeidlich das Übertragen der Identifikation des Melders bedeutet;
- Abspeichern der Position in einem Gebäudemanagementsystem.

Es ist Aufgabe der vorliegenden Erfindung ein Verfahren und eine Vorrichtung zur Durchführung des Verfahrens bereitzustellen, die eine automatische Verortung eines Feuermelders bei dessen Montage ermöglichen.

Die Aufgabe wird gelöst durch ein Verfahren zur automatischen Verortung eines Feuermelders, insbesondere in einem Gebäude, das Verfahren umfassend die folgenden Schritte:
a) Kennzeichnen der Position in einem Plan, an der der Feuermelder angebracht ist, durch einen Bediener mit Eingabemittel, wobei der Plan auf einem mobilen Kommunikationsgerät des Bedieners dargestellt ist;
b) Auslösen einer Testmeldung des Feuermelders an eine Leitwarte durch den Bediener, wobei die Testmeldung eine eindeutige Identifikationsnummer des Feuermelders umfasst;
c) Beauftragung der Leitstelle durch den Bediener durch das mobile Kommunikationsgerät auf das Kommunikationsgerät die seit einer definierten Zeitspanne an der Leitstelle vorliegenden Testmeldungen zu senden; wobei, wenn genau eine Testmeldung vorliegt, die in der Testmeldung vorhandene eindeutige Identifikationsnummer der Position des Feuermelders in dem Plan, der auf dem mobilen Kommunikationsgerät dargestellt ist, durch den Bediener durch Eingabemittel zuordenbar ist, und wobei, wenn mehr als eine Testmeldung vorliegt, ein erneutes Auslösen einer Testmeldung des Feuermelders an die Leitwarte durch den Bediener erfolgt;
(d) Abspeichern der Zuordnung der eindeutigen Identifikationsnummer des Feuermelders mit dessen Position in einem Gebäudemanagementsystem. Dadurch erfolgt eine automatische Zuordnung des Installationsortes (Position) des Feuermelders zu dessen Identifikationsnummer. Eine manuelle und damit fehlerträchtige Eingabe der Identifikationsnummer entfällt. Der Aufwand zur Installation und Verortung der Feuermelder wird außerdem deutlich reduziert. Eine nachträgliche Übertragung der auf Papier erfassten Daten in das Gebäudemanagementsystem entfällt. Ein Gebäudemanagementsystem (GMS, Facilitymanagement System) besteht aus einem rechnergestützten System (z.B. Computer mit Ein-/Ausgabemittel und Speichermedien), das u.a. automatisch im Alarmfall detaillierte Informationen in textlicher und/oder grafischer Form für die taktischen Vorgehensweisen am Alarmort (z.B. Unglücksort im Gebäude) für Rettungskräfte, aber auch für Bewohner oder für Arbeitskräfte in einem Bürogebäude zur Verfügung stellt (z.B. durch Lautsprecherdurchsagen oder auf Monitoren). Ein Gebäudemanagementsystem unterstützt den Betreiber oder einen Dritten, der die Betreibung vertraglich übernommen hat, insbesondere bei seinen dispositiven und rechtlichen Sicherheitsaufgaben.

Eine erste vorteilhafte Ausgestaltung der Erfindung liegt darin, dass das Auslösen der Testmeldung und die Beauftragung der Leitstelle durch eine einzige Aktion des Bedieners erfolgen. Dies steigert die Effizienz des Verfahrens (z.B. Reduktion des Montagezeit).

Eine weitere vorteilhafte Ausgestaltung der Erfindung liegt darin, dass das Auslösen der Testmeldung weiterhin ein Lokalisierungssystem aktiviert, das die Position des Feuermelders bestimmt und an das mobile Kommunikationsgerät übermittelt. Durch das Lokalisierungssystem kann die Position des Feuermelders automatisch bestimmt werden, Fehleingaben bei der Positionsangabe werden damit vermieden.

Die Aufgabe wird weiterhin gelöst durch eine Vorrichtung zur Durchführung eines Verfahrens nach einem der Ansprüche 1 bis 3, die Vorrichtung umfassend:
a) Mittel zum Auslösen einer Testmeldung des Feuermelders an eine Leitwarte;
b) Mittel zum Bestimmen der Positionsdaten des Feuermelders; und
c) Mittel zur Datenübertragung der Positionsdaten und Testmeldungen. Als mobiles Kommunikationsgerät können z.B. Mobiltelefone, Smartphone, PDA, Notebook oder Tablet-PC verwendet werden. Als Kommunikationsverbindung zu Datenübertragung können beispielsweise Mobilfunk (z.B. GSM, UMTS) oder WLAN verwendet werden.

Ein Ausführungsbeispiel der Erfindung ist in der Zeichnung dargestellt und wird im Folgenden erläutert.

Dabei zeigen:
- FIG 1: eine erste beispielhafte Ausgestaltung der vorliegenden Erfindung,
- FIG 2: eine beispielhafte Prinzipdarstellung für ein mobiles Kommunikationsgerät,
- FIG 3: eine zweite beispielhafte Ausgestaltung der vorliegenden Erfindung,
- FIG 4: eine dritte beispielhafte Ausgestaltung der vorliegenden Erfindung, und
- FIG 5: eine vierte beispielhafte Ausgestaltung der vorliegenden Erfindung.

Gegenstand der Erfindung ist insbesondere ein Verfahren, das eine automatische Verortung eines Feuermelders bei dessen Montage ermöglicht und dabei die umständliche und fehleranfällige Eingabe der Identifikationsnummer und Ortsbeschreibung vermeidet.

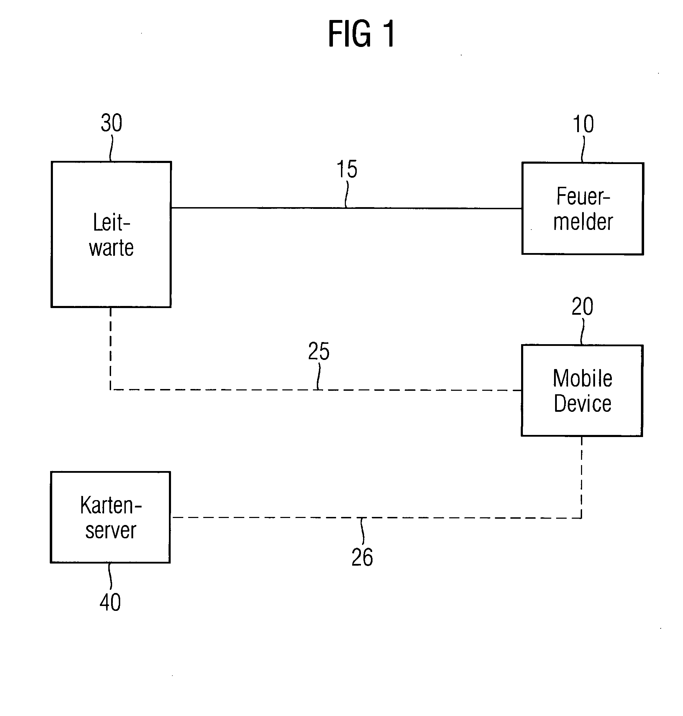

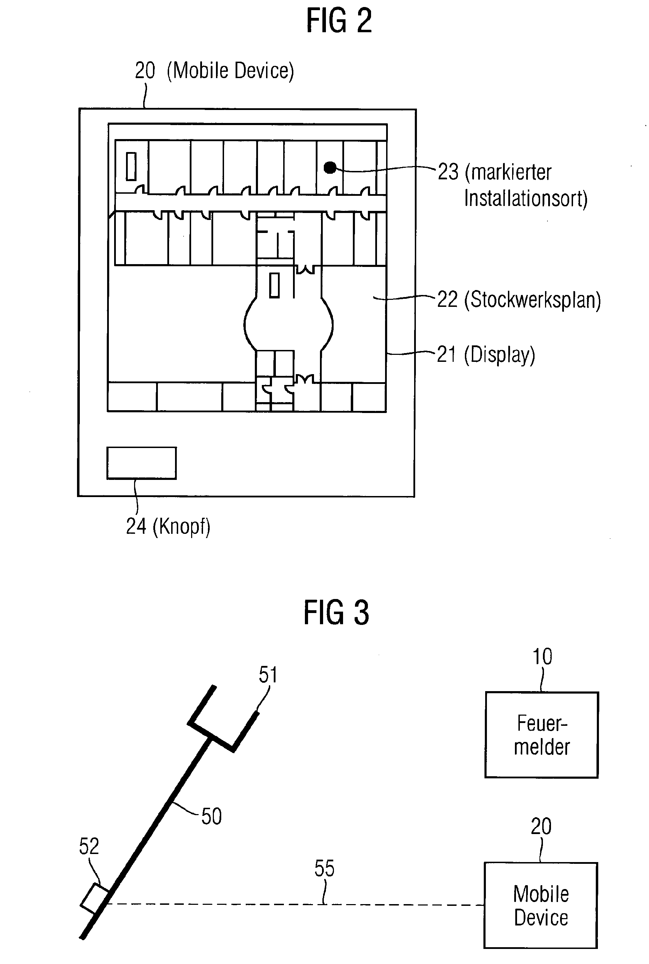

Figur 1 zeigt eine erste beispielhafte Ausgestaltung der vorliegenden Erfindung. Ein Techniker (Bediener) B will einen Feuermelder 10 installieren, der über eine Leitung 15 mit einer Leitwarte 30 verbunden ist. Der Techniker ist dazu mit einem mobilen Kommunikationsgerät 20 ausgestattet. Dies kann z.B. ein Mobiltelefon, ein Smartphone, ein PDA (Personal Digital Assistant), ein Notebook oder ein Tablet-PC sein. Über eine Kommunikationsverbindung 25 (beispielsweise Mobilfunk (z.B. GSM, UMTS) oder WLAN) kann das mobile Kommunikationsgerät 20 mit der Leitwarte 30 kommunizieren. Auf dem Kommunikationsgerät 20 läuft eine Anwendung (Programm), die dem Techniker die Stockwerkspläne (22, Figur 2) des Gebäudes anzeigen kann, in dem er die Feuermelder 10 installieren soll. Ein Feuermelder 10 kann über ein Speichermedium (z.B. Flash-EEPROM oder digitalen Speicherchip, in dem z.B. die Identifikationsnummer des Feuermelders ablegbar ist) verfügen.

Die Stockwerkspläne (22, Figur 2) sind mit geografischen Bezugsdaten versehen, so dass die Anwendung im Kommunikationsgerät 20 für jeden Punkt in dem Plan dessen Koordinaten ermitteln kann. Die Koordinaten können beispielsweise in Längen- und Breitengrad z.B. nach WGS84 oder als x/y-Wert angegeben werden, der die Entfernung in Meter ab einem beliebig gewählten Punkt des Gebäudes oder Grundstücks beschreibt. Zusätzlich ist für jeden Stockwerksplan (22, Figur 2) auch dessen Stockwerksnummer bzw. Meter über Bezugsniveau bekannt. Durch bekannte Algorithmen (Zuordnungsverfahren) kann jeder geografischen Position auch ein Raumname oder eine Raumnummer zugeordnet werden, z.B. "Gebäude 53, 3. Flur, Raum 53-318". Dabei ist es unwesentlich, ob die Stockwerkspläne (22, Figur 2) lokal auf dem mobilen Kommunikationsgerät 20 gespeichert sind oder bedarfsweise über eine Kommunikationsverbindung 26 von einem Server 40 (z.B. von einem Internetserver über eine Internetverbindung) geladen werden.

Der Techniker B, der in einem bestimmten Stockwerk des Gebäudes einen Feuermelder 10 installieren will, lässt sich im Display (21, Figur 2)) seines Kommunikationsgeräts 20 den entsprechenden Stockwerksplan (22, Figur 2) anzeigen und wählt den angezeigten Ausschnitt so, dass der Raum sichtbar ist, in dem er den Feuermelder 10 installieren will. In dem angezeigten Stockwerksplan (22, Figur 2) kennzeichnet der Techniker B die Stelle (23, Figur 2), an der er den Feuermelder 10 installieren wird. Je nach verwendetem Kommunikationsgerät 20 kann dies auf unterschiedliche Weise erfolgen: bei einem klassischen Mobiltelefon über die Navigationstasten, bei einem PDA mit Hilfe des Stifts, bei einem Notebook über die Maus bzw. das Touch-Pad und bei einem modernen Tablet-PC durch Antippen mit dem Finger. Anschließend montiert er den Feuermelder 10 z.B. an der Decke und verbindet ihn mit dem Kabel 15, über das die Alarmmeldung an die Leitwarte 30 gesendet werden soll. Nach erfolgter Montage testet der Techniker B die Verbindung zur Leitwarte 30. Dabei löst er einen Testalarm aus, z.B. durch Drücken eines entsprechenden Knopfs am Feuermelder 10 oder durch Simulation einer Rauchentwicklung. Dadurch sendet der Feuermelder 10 ein Signal an die Leitwarte 30. In diesem Signal ist auch dessen Identifikationsnummer enthalten.

Nahezu zeitgleich drückt der Techniker B auch in der Anwendung auf seinem Kommunikationsgerät 20 auf einen bestimmten Knopf 24. Dies kann ein realer Knopf (24, Figur 2) am Gerät sein oder ein virtueller, in dem Display (21, Figur 2) dargestellter Knopf, den er mittels Maus, Stift oder Finger auslöst. Über die Kommunikationsverbindung 25 fragt daraufhin die Anwendung die Leitwarte, welche Alarmmeldungen von Feuermeldern in den letzten z.B. 3 Sekunden eingetroffen sind.

Wenn nur eine Testalarmmeldung eingetroffen ist, kann diese eindeutig dem montierten Feuermelder 10 zugeordnet werden. Dann sendet die Leitwartensoftware über die Kommunikationsverbindung 25 (z.B. eine Funkverbindung) die im Testalarm mitgelieferte Identifikationsnummer an die Anwendung auf dem mobilen Kommunikationssystem 20 zurück. Die Anwendung kann nun die Identifikationsnummer des Feuermelders 10 eindeutig einer Position zuordnen, nämlich den geografischen Daten des Punktes in der Stockwerkskarte (22, Figur 2), den der Techniker B zuvor markiert hatte.

Wenn jedoch in einem definierten Zeitabschnitt (z.B. in den letzten 3 Sekunden) in der Leitwarte 30 mehr als eine Testalarmmeldung von unterschiedlichen Feuermeldern 10 eingetroffen sind - weil z.B. mehrere Techniker B gleichzeitig mit der Installation von Feuermeldern 10 beschäftigt sind -, dann erhält der Techniker B eine entsprechende Meldung und wird aufgefordert, den Testalarm erneut zu schicken.

Wenn der Techniker sich bei der Markierung des Installationsortes etwas vertan hatte, kann er den markierten Punkt (23, Figur 2) nachträglich noch verschieben. Die dem Feuermelder 10 zugeordnete Position wird entsprechend geändert.

Die Anwendung überträgt die Zuordnung der FeuermelderIdentifikationsnummer zu einer geografischen Position entweder sofort oder bei einem späteren Datenabgleich in die Datenbank des Gebäudemanagementsystems, so dass die Leitwarte 30 dann bei einem Feueralarm stets weiß, an welcher geographischen Position der Alarm ausgelöst wurde - und damit in welchem Gebäude, in welchem Stockwerk und in welchem Raum.

Figur 2 zeigt eine beispielhafte Prinzipdarstellung für ein mobiles Kommunikationsgerät 20. Das Kommunikationsgerät 20 kann z.B. ein Mobiltelefon, ein Smartphone, ein PDA (Personal Digital Assistant), ein Notebook oder ein Tablet-PC sein.

Über eine Kommunikationsverbindung (beispielsweise Mobilfunk (z.B. GSM, UMTS) oder WLAN) kann das mobile Kommunikationsgerät 20 mit einer Leitwarte kommunizieren. Auf dem Kommunikationsgerät 20 läuft eine Anwendung (Softwareprogramm, Firmware), die einem Techniker die Stockwerkspläne 22 des Gebäudes anzeigen kann, in dem er die Feuermelder installieren soll. Über einen Auslösemechanismus (z.B. ein Knopf 24 am Kommunikationsgerät 20) beauftragt der Bediener die Leitstelle auf das Kommunikationsgerät 20 die seit einer definierten Zeitspanne (z.B. 3 Sekunden) an der Leitstelle vorliegenden Testmeldungen zu senden. Das Kommunikationsgerät 20 enthält weiterhin ein Display 21 u.a. zur Anzeige des Stockwerkplans 22 oder des Installationsortes 23 eines Feuermelders. Weiterhin kann das Kommunikationsgerät 20 über ein integriertes Positionsbestimmungssystem (z.B. GPS) verfügen.

Figur 3 zeigt eine zweite beispielhafte Ausgestaltung der vorliegenden Erfindung. In dieser Ausgestaltung der Erfindung kann das Auslösen des Testalarms und das Drücken eines Knopfs (24, Figur 2) auf dem Kommunikationsgerät 20 zu einer Aktion zusammengefasst werden. Das Auslösen des Testalarms erfolgt in der Regel über eine lange Stange 50 mit einem Kopf 51 (Haube) an dem oberen Ende, der über den montierten Feuermelder 20 gestülpt wird. Am unteren Ende der Stange wird auf einen Knopf 52 gedrückt, der dann über eine entsprechende Mechanik oder Elektronik im Stangenkopf 51 den Feuermelder 10 veranlasst, den Alarm auszulösen. Mit dem Knopf 52 (auch ein anderer Auslösemechanismus ist verwendbar) am unteren Ende der Stange ist nun eine Elektronik verbunden, die eine drahtgebundene oder drahtlose Verbindung 55 (z.B. Bluetooth) mit dem mobilen Kommunikationsgerät 20 besitzt. Über diese Verbindung 55 wird beim Drücken des Knopfes 52 auf dem Kommunikationsgerät 20 ein Event (Ereignis) ausgelöst, wodurch das Kommunikationsgerät 20 das Leitsystem (30, Figur 1) nach der gerade eingegangenen Testalarmmeldung fragt.

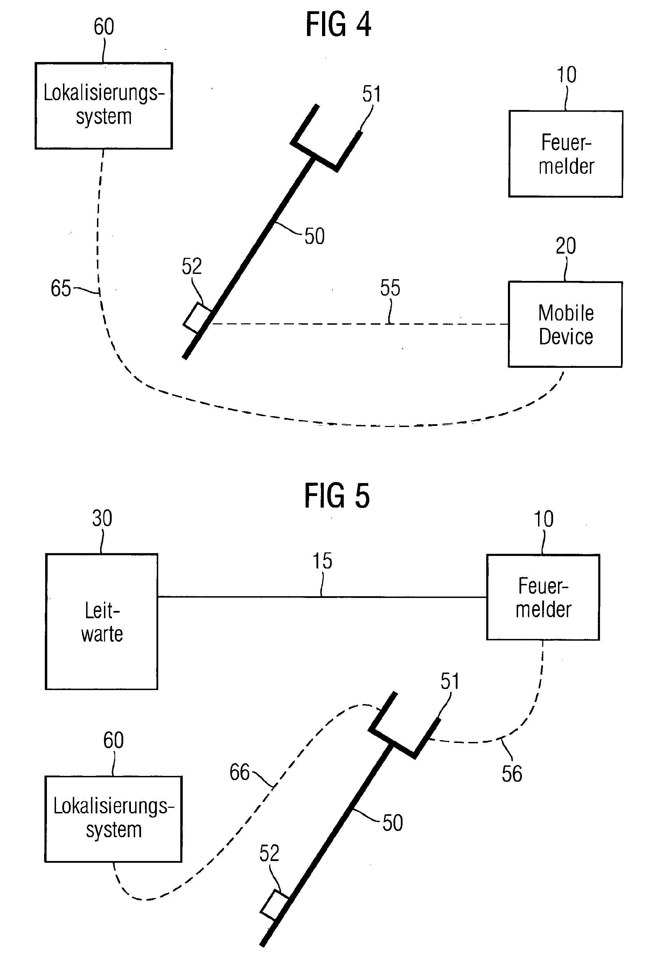

Figur 4 zeigt eine dritte beispielhafte Ausgestaltung der vorliegenden Erfindung. In einer weiteren beispielhaften Ausgestaltung der Erfindung kann auf das manuelle Markieren der Installationsposition verzichtet werden. Das Gebäude ist mit einem Lokalisierungssystem 60 ausgestattet, das im Gebäude eine 3D-Lokalisierung mit einer Genauigkeit von ca. 1 Meter ermöglicht. Beim Lokalisierungssystem 60 kann es sich z.B. um ein RTLS (realtime location system) handeln. Das Lokalisierungssystem 60 kann z.B. auf GPS-, WLAN- oder RFID-Technologie basieren.

Im Kopf (Haube) 51 der für die Auslösung des Testalarms verwendeten Stange 50 ist dann eine Elektronik enthalten, deren Position von dem Lokalisierungssystem 60 zeitgleich mit dem Auslösen des Testalarms ermittelt wird. Die so ermittelte Position wird über eine weitere Kommunikationsverbindung 65 (z.B. eine drahtlose Funkverbindung) an das mobile Kommunikationssystem 20 übergeben, das daraus wie zuvor beschrieben durch Kommunikation mit der Leitwarte (30, Figur 1) die Zuordnung Feuermelder zu Position ermittelt.

Figur 5 zeigt eine vierte beispielhafte Ausgestaltung der vorliegenden Erfindung. In dieser Ausgestaltung der Erfindung kann auf das mobile Kommunikationsgerät verzichtet werden. Das Gebäude ist mit einem Lokalisierungssystem 60 ausgestattet, das im Gebäude eine 3D-Lokalisierung mit einer Genauigkeit von ca. 1 Meter ermöglicht. Im Kopf 51 der für die Auslösung des Testalarms verwendeten Stange 50 ist eine Elektronik enthalten, deren Position vom Lokalisierungssystem 60 ermittelt werden kann. Wenn der Techniker den Knopf 52 an der Stange zum Auslösen des Testalarms drückt, fragt die Elektronik in der Stange 50 (die Stange kann teilweise hohl sein, im Hohlraum kann die Elektronik (z.B. Mikrochip) untergebracht werden) zuerst vom Lokalisierungssystem 60 über die Kommunikationsverbindung 66 die Position des Kopfs 51 ab. Die Elektronik im Kopf der Stange Überträgt die ermittelte Position auf den Feuermelder (z.B. drahtlos mittels Bluetooth oder ZigBee 56) und der Feuermelder gibt diese Positionsinformation im Testalarmsignal zusammen mit seiner Identifikationsnummer an die Leitwarte 30 weiter. Da in einem Signal sowohl Identifikationsnummer als auch Position Übertragen werden, ist diese Zuordnung stets eindeutig, auch wenn zahlreiche Techniker gleichzeitig Feuermelder montieren und verorten.

In einer weiteren Variante der Erfindung erfolgt die Zuordnung von Feuermelderidentifikationsnummer und Installationsort durch die Leitwartensoftware und nicht durch die Anwendung auf dem mobilen Kommunikationsgerät. Dazu überträgt das Kommunikationsgerät nach dem Auslösen des Testalarms die Position des Feuermelders - unabhängig davon, ob sie durch Markieren in der Karte oder mit dem Lokalisierungssystem ermittelt wurde - an die Leitwarte anstelle von ihr die Identifikationsnummer des sich zuletzt gemeldeten Feuermelders zu erfragen.

Der erfinderische Schritt der vorliegenden Erfindung liegt insbesondere in der automatischen Zuordnung des Installationsortes (Position) des Feuermelders zu dessen Identifikationsnummer. Eine manuelle und damit fehlerträchtige Eingabe der Identifikationsnummer entfällt. Ebenso die Angabe der Raumnummer bzw. die textuelle Beschreibung der Installationsposition im Raum (z.B. "3. Feuermelder, gezählt vom Fenster an der Westseite"). Somit ist der Installationsort genauer und sicherer beschrieben als bei der gegenwärtigen Lösung. Fehler bei der Eingabe der Identifikationsnummer können nicht mehr auftreten. Der Aufwand zur Installation und Verortung der Feuermelder wird deutlich reduziert. Eine nachträgliche Übertragung der auf Papier erfassten Daten in das Gebäudemanagementsystem entfällt.

Verfahren und Vorrichtung zur automatischen Verortung eines Feuermelders in einem Gebäude durch automatischen Datenabgleich der Identifizierungsnummer und der Positionierungsdaten des Feuermelders entweder in einer Leitwarte oder einem mobilen Kommunikationsgerät eines Bedieners. Dadurch, dass keine manuellen Eingaben erforderlich sind, werden fehlerhafte Eingaben vermieden.

### Bezugszeichen

- 10: Feuermelder
- 15, 25, 26, 55, 56, 65, 66: Kommunikationsverbindung
- 20: Mobiles Gerät
- 21: Display
- 22: Stockwerksplan
- 23: Markierter Installationsort
- 24: Auslösemechanismus
- 30: Leitwarte
- 40: Kartenserver
- 50: Stange
- 51: Kopf
- 52: Auslösemechanismus
- 60: Lokalisierungssystem
- B: Bediener

## Patentansprüche

1. Verfahren zur automatischen Verortung eines Feuermelders (10), insbesondere in einem Gebäude, das Verfahren umfassend die folgenden Schritte:
a) Kennzeichnen der Position in einem Plan, an der der Feuermelder (10) angebracht ist, durch einen Bediener mit Eingabemittel, wobei der Plan auf einem mobilen Kommunikationsgerät (20) des Bedieners (B) dargestellt ist;
b) Auslösen einer Testmeldung des Feuermelders (10) an eine Leitwarte durch den Bediener (B), wobei die Testmeldung eine eindeutige Identifikationsnummer des Feuermelders (10) umfasst;
c) Beauftragung der Leitstelle durch den Bediener (B) durch das mobile Kommunikationsgerät auf das Kommunikationsgerät (20) die seit einer definierten Zeitspanne an der Leitstelle (30) vorliegenden Testmeldungen zu senden; wobei,
wenn genau eine Testmeldung vorliegt, die in der Testmeldung vorhandene eindeutige Identifikationsnummer der Position des Feuermelders (10) in dem Plan, der auf dem mobilen Kommunikationsgerät (20) dargestellt ist, durch den Bediener (B) durch Eingabemittel zuordenbar ist, und wobei,
wenn mehr als eine Testmeldung vorliegt, ein erneutes Auslösen einer Testmeldung des Feuermelders (10) an die Leitwarte (30) durch den Bediener (B) erfolgt;
(d) Abspeichern der Zuordnung der eindeutigen Identifikationsnummer des Feuermelders (10) mit dessen Position in einem Gebäudemanagementsystem.

2. Verfahren nach Anspruch 1, wobei das Auslösen der Testmeldung und die Beauftragung der Leitstelle (30) durch eine einzige Aktion des Bedieners (B) erfolgen.

3. Verfahren nach Anspruch 1 oder 2, wobei das Auslösen der Testmeldung weiterhin ein Lokalisierungssystem (60) aktiviert, das die Position des Feuermelders (10) bestimmt und an das mobile Kommunikationsgerät (20) übermittelt.

4. Vorrichtung zur Durchführung eines Verfahrens nach einem der Ansprüche 1 bis 3, die Vorrichtung umfassend:
a) Mittel zum Auslösen einer Testmeldung des Feuermelders (10) an eine Leitwarte (30);
b) Mittel zum Bestimmen der Positionsdaten des Feuermelders(10); und
c) Mittel zur Datenübertragung der Positionsdaten und Testmeldungen.

## Claims

1. Method for automatically locating a fire alarm (10), in particular in a building, the method comprising the following steps:
a) the position at which the fire alarm (10) is installed is marked in a plan by an operator using input means, the plan being displayed on a mobile communications device (20) of the operator (B);
b) a test message of the fire alarm (10) to a control centre is triggered by the operator (B), the test message including a unique identification number of the fire alarm (10) ;
c) the control centre is instructed by the operator (B) by means of the mobile communications device (20) to send the test messages that have been present at the control centre (30) for a defined period of time to the communications device (20), wherein,
if precisely one test message is present, the unique identification number contained in the test message for the position of the fire alarm (10) in the plan displayed on the mobile communications device (20) can be assigned by the operator (B) using input means, and wherein,
if more than one test message is present, a new test message of the fire alarm (10) to the control centre (30) is triggered by the operator (B);
(d) the assignment of the unique identification number of the fire alarm (10) is stored together with its position in a building management system.

2. Method according to claim 1, wherein the test message is triggered and the control centre (30) instructed by means of a single action of the operator (B).

3. Method according to claim 1 or 2, wherein the triggering of the test message additionally activates a localisation system (60) which determines the position of the fire alarm (10) and communicates same to the mobile communications device (20).

4. Device for performing a method according to one of claims 1 to 3, the device comprising:
a) means for triggering a test message of the fire alarm (10) to a control centre (30);
b) means for determining the position data of the fire alarm (10); and
c) means for transmitting the position data and test messages.

## Revendications

1. Procédé pour la localisation automatique d'un détecteur d'incendie (10), en particulier dans un bâtiment, le procédé comprenant les étapes suivantes :
a) reconnaissance de la position dans un plan, dans laquelle le détecteur d'incendie (10) est installé, par l'intermédiaire d'un opérateur avec des moyens de saisie, le plan étant représenté sur un appareil de communication mobile (20) de l'opérateur (B) ;
b) déclenchement d'un message de test du détecteur d'incendie (10) au niveau d'un poste de supervision par l'intermédiaire de l'opérateur (B), le message de test comprenant un numéro d'identification sans équivoque du détecteur d'incendie (10) ;
c) délégation du poste de supervision par l'intermédiaire de l'opérateur (B) via l'appareil de communication mobile à l'appareil de communication (20) de l'envoi des messages de test présents depuis un laps de temps défini au poste de supervision (30) ; dans lequel
lorsqu'il y a précisément un message de test, le numéro d'identification sans équivoque présent dans le message de test de la position du détecteur d'incendie (10) dans le plan qui est représenté sur l'appareil de communication mobile (20) est classable par l'opérateur (B) via des moyens de saisie, et dans lequel
lorsqu'il y a plus d'un message de test, un nouveau déclenchement d'un message de test du détecteur d'incendie (10) au niveau du poste de supervision (30) par l'intermédiaire de l'opérateur (B) se produit ;
d) mise en mémoire de l'association du numéro d'identification sans équivoque du détecteur d'incendie (10) avec la position de celui-ci dans le système de gestion du bâtiment.

2. Procédé selon la revendication 1, dans lequel le déclenchement du message de test et la délégation du poste de supervision (30) se produisent par l'intermédiaire d'une action unique de l'opérateur (B).

3. Procédé selon la revendication 1 ou 2, dans lequel le déclenchement du message de test active en outre un système de localisation (60), qui détermine la position du détecteur d'incendie (10) et la transmet à l'appareil de communication mobile (20).

4. Dispositif pour la réalisation d'un procédé selon l'une des revendications 1 à 3, le dispositif comprenant :
a) des moyens pour le déclenchement d'un message de test du détecteur d'incendie (10) au niveau d'un poste de supervision (30) ;
b) des moyens pour la détermination des données de position du détecteur d'incendie (10) ; et
c) des moyens pour le transfert de données des données de position et des messages de test.
